# EUROPÄISCHE PATENTANMELDUNG

(11) **EP 3 277 000 A1**
(43) Veröffentlichungstag der Anmeldung: **31.01.2018**
(21) Anmeldenummer: 16182110.3
(22) Anmeldetag: 29.07.2016
(51) Int. Cl.: H04W 8/20

(54) **PROFILSERVER ZUR BEREITSTELLUNG GERÄTEANGEPASSTER E-SIM-PROFILE**

(71) Anmelder: Deutsche Telekom AG, 53113 Bonn (DE)
(72) Erfinder: Seifert, Olaf, 27308 Kirchlinteln (DE)
(74) Vertreter: Patentship Patentanwaltsgesellschaft mbH

(57) **Zusammenfassung**

Die vorliegende Erfindung betrifft das Gebiet der elektronischen Teilnehmeridentifikationsmodule (eSIM: electronic Subscriber Identification Module).
eSIMs sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Die Zuordnung des eSIM-Profils zu einem Benutzer des mobilen Kommunikationsgerätes erfolgt in der Regel durch einen **Vertrag** zwischen einem Netzwerkbetreiber und einem Benutzer. Der Benutzer kann jedoch unterschiedliche Kommunikationsgeräte mit unterschiedlichen Leistungscharakteristiken aufweisen.
Es ist die Aufgabe der Erfindung, ein Konzept zur Bereitstellung eines **geräteangepassten** elektronischen Kommunikationsprofils zu schaffen.
Die vorliegende Erfindung basiert auf der Erkenntnis, dass die Aufgabe durch einen Profilserver (100) gelöst werden kann, welcher ansprechend auf eine Profilanfrage entweder ein **geräteangepasstes** Profil an ein mobiles Kommunikationsgerät (103) aussendet oder welcher im Falle der Nichtverfügbarkeit eines geräteangepassten oder optimalen Kommunikationsprofils eine Kommunikationsadresse eines weiteren Profilserver (109) bereitstellt.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines
Mobilfunknetzwerkbetreibers.

Üblicherweise wird das elektronische Kommunikationsprofil durch ein mobiles Kommunikationsgerät, beispielsweise ein Smartphone, von einem Profilserver, beispielsweise von einem SMDP+-Profilserver abgerufen und für das elektronische Teilnehmeridentifikationsmodul aktiviert.

Die Zuordnung des elektronischen Kommunikationsprofils zu einem Benutzer des mobilen Kommunikationsgerätes erfolgt in der Regel durch einen Vertrag zwischen einem Netzwerkbetreiber und einem Benutzer. Der Benutzer kann jedoch unterschiedliche Kommunikationsgeräte mit unterschiedlichen Leistungscharakteristiken aufweisen.

Es ist die Aufgabe der Erfindung, ein Konzept zur Bereitstellung eines geräteangepassten elektronischen Kommunikationsprofils zu schaffen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch einen Profilserver gelöst werden kann, welcher ansprechend auf eine Profilanfrage entweder ein geräteangepasstes Profil an ein mobiles Kommunikationsgerät aussendet oder welcher im Falle der Nichtverfügbarkeit eines geräteangepassten oder optimalen Kommunikationsprofils eine Kommunikationsadresse einer Netzwerkentität an des mobile Kommunikationsgerät aussendet, welche als ein weiterer Profilserver ein elektronisches Kommunikationsprofil bereitstellt, das geräteangepasster ist oder für die Geräteeigenschaft besser unterstützt, oder welche ein elektronisches Verkaufsprotal ist, das unterschiedliche elektronische Kommunikationsprofile anbietet.

Gemäß einem ersten Aspekt betrifft die Erfindung einen Profilserver zur Bereitstellung eines elektronischen Kommunikationsprofils für ein elektronisches Teilnehmeridentifikationsmodul eines mobilen Kommunikationsgerätes für die Kommunikation über ein Kommunikationsnetzwerk, mit einer Kommunikationsschnittstelle zum Empfangen einer Profilanfrage nach dem Kommunikationsprofil von dem mobilen Kommunikationsgerät, wobei die Profilanfrage eine elektronische Identifikation des elektronischen Identifikationsmoduls und eine Geräteeigenschaft des mobilen Kommunikationsgerätes aufweist; einem Speicher, in welchem eine Mehrzahl von elektronischen Kommunikationsprofilen für unterschiedliche Geräteeigenschaften gespeichert ist; und einem Prozessor, welcher ausgebildet ist, zu überprüfen, ob in dem Speicher ein elektronisches Kommunikationsprofil für die Geräteeigenschaft des mobilen Kommunikationsgerätes gespeichert ist, wobei der Prozessor ausgebildet ist, falls in dem Speicher ein elektronisches Kommunikationsprofil für die Geräteeigenschaft gespeichert ist, das gespeicherte elektronische Kommunikationsprofil auszuwählen, oder, falls in dem Speicher kein elektronisches Kommunikationsprofil für die Geräteeigenschaft gespeichert ist, eine Kommunikationsadresse einer Netzwerkentität bereitzustellen; wobei die Kommunikationsschnittstelle ausgebildet ist, entweder das ausgewählte Kommunikationsprofil oder die Kommunikationsadresse einer Netzwerkentität an das mobile Kommunikationsgerät auszusenden.

In einer Ausführungsform ist in dem Speicher ferner eine Mehrzahl von Kommunikationsadressen von Profilservern mit elektronischen Kommunikationsprofilen gespeichert, wobei der Prozessor ausgebildet ist, eine Kommunikationsadresse eines Profilservers als Netzwerkentität aus dem Speicher auszulesen.

In einer Ausführungsform sind für die gespeicherten Kommunikationsadressen der Profilserver Geräteeigenschaften angegeben, welche durch die elektronischen

Kommunikationsprofile der unter den gespeicherten Kommunikationsadressen erreichbaren Profilserver unterstützt sind, und wobei der Prozessor ausgebildet ist, die Kommunikationsadresse desjenigen Profilservers aus dem Speicher auszulesen, welcher ein elektronisches Kommunikationsprofil bereitstellt, das die Geräteeigenschaft unterstützt.

In einer Ausführungsform umfasst die Geräteeigenschaft zumindest eine der folgenden Geräteeigenschaften umfasst: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

In einer Ausführungsform ist der Prozessor ausgebildet, das elektronische Kommunikationsprofil ferner in Abhängigkeit von einem Kommunikationsvertrag zwischen einem Benutzer des mobilen Kommunikationsgerätes und einem Netzwerkbetreiber auszuwählen.

In einer Ausführungsform ist der Prozessor ausgebildet, das elektronische Kommunikationsprofil ferner in Abhängigkeit von der elektronischen Identifikation auszuwählen.

In einer Ausführungsform ist der Prozessor ausgebildet, das elektronische Kommunikationsprofil an die Geräteeigenschaft anzupassen, insbesondere hinsichtlich einer Datenrate oder eines Datenvolumens, insbesondere durch eine Angabe einer höheren oder niedrigeren Datenrate oder eines niedrigeren oder höheren Datenvolumens in dem Kommunikationsprofil.

In einer Ausführungsform definiert das ausgewählte Kommunikationsprofil die Kommunikationseigenschaften der Kommunikation des mobilen Kommunikationsgerätes über das Kommunikationsnetzwerk, insbesondere eine Datenrate, eine Funkzugangstechnologie, Dienste und/oder Anwendungen für das mobile Kommunikationsgerät, insbesondere im Kommunikationsnetzwerk, eine Kommunikationsverzögerung, insbesondere eine maximale Kommunikationsverzögerung.

In einer Ausführungsform ist der Prozessor ausgebildet, die Geräteeigenschaft zu analysieren, um eine Leistungsfähigkeit des mobilen Kommunikationsgerätes zu bestimmen, und wobei der Prozessor ausgebildet ist, und dasjenige Kommunikationsprofil auszuwählen oder zu bestimmen, das die Leistungsfähigkeit, insbesondere hinsichtlich der Datenrate oder der kontaktlosen Schnittstellen wie NFC oder der Bildauflösung einer Bildkamera unterstützt.

In einer Ausführungsform ist das elektronische Kommunikationsprofil ein eSIM-Profil und wobei das elektronische Teilnehmeridentifikationsmodul ein eSIM-Modul.

In einer Ausführungsform ist die Kommunikationsschnittstelle ausgebildet, eine Profilanfrage von einem entfernten Profilserver zu empfangen, wobei die Profilanfrage eine elektronische Identifikation des elektronischen Identifikationsmoduls und eine Geräteeigenschaft des mobilen Kommunikationsgerätes aufweist; wobei der Prozessor ausgebildet ist, zu überprüfen, ob in dem Speicher ein elektronisches Kommunikationsprofil für die Geräteeigenschaft des mobilen Kommunikationsgerätes gespeichert ist, wobei der Prozessor ausgebildet ist, falls in dem Speicher ein elektronisches Kommunikationsprofil für die Geräteeigenschaft gespeichert ist, das gespeicherte elektronische Kommunikationsprofil auszuwählen, oder, falls in dem Speicher kein elektronisches Kommunikationsprofil für die Geräteeigenschaft gespeichert ist, eine Kommunikationsadresse einer Netzwerkentität bereitzustellen; wobei die Kommunikationsschnittstelle ausgebildet ist, entweder das ausgewählte Kommunikationsprofil oder die Kommunikationsadresse einer Netzwerkentität an das mobile Kommunikationsgerät auszusenden. Hierbei wird der Fall implementiert, in welchem ein Profilserver, welcher eine Profilanfrage von dem mobilen Kommunikationsgerät erhalten hat, kein entsprechendes Kommunikationsprofil aufweist und dem Kommunikationsgerät die Kommunikationsadresse, beispielsweise URL oder URI, die Profilservers übermittelte.

Die Kommunikationsschnittstelle ist beispielsweise eine Mobilfunkschnittstelle, insbesondere eine LTE- oder eine UMTS-Schnittstelle.

Der Profilserver ist beispielsweise SMDP+-Server. Das elektronische Teilnehmeridentifikationsmodul ist beispielsweise ein eSIM.

Gemäß einem zweiten Aspekt betrifft die Erfindung ein Verfahren zum Bereitstellen eines elektronischen Kommunikationsprofils für ein elektronisches Teilnehmeridentifikationsmodul eines mobilen Kommunikationsgerätes für die Kommunikation über ein Kommunikationsnetzwerk, mit: Empfangen einer Profilanfrage nach dem Kommunikationsprofil von dem mobilen Kommunikationsgerät, wobei die Profilanfrage eine elektronische Identifikation des elektronischen Identifikationsmoduls und eine Geräteeigenschaft des mobilen Kommunikationsgerätes aufweist; automatischem Überprüfen durch einen Prozessor, ob in einem Speicher ein elektronisches Kommunikationsprofil für die Geräteeigenschaft des mobilen Kommunikationsgerätes gespeichert ist, und, falls in dem Speicher ein elektronisches Kommunikationsprofil für die Geräteeigenschaft gespeichert ist, Auswählen des gespeicherten elektronischen Kommunikationsprofils, oder, falls in dem Speicher kein elektronisches Kommunikationsprofil für die Geräteeigenschaft gespeichert ist, Bereitstellen einer Kommunikationsadresse einer Netzwerkentität; und Aussenden des ausgewählten Kommunikationsprofils oder der Kommunikationsadresse der Netzwerkentität an das mobile Kommunikationsgerät.

In einer Ausführungsform ist die Netzwerkentität ein weiterer Profilserver mit elektronischen Kommunikationsprofilen oder ein elektronisches Verkaufsportal ist, welches eine Mehrzahl von elektronischen Kommunikationsprofilen für unterschiedliche Geräteeigenschaften bereitstellt.

Gemäß einem dritten Aspekt betrifft die Erfindung ein Subnetzwerk eines Kommunikationsnetzwerks mit einer Mehrzahl von Punkt-Zu-Punkt-Subnetzwerken, insbesondere ein Slice eines 5G-Kommunukationsnetzwerks, mit dem Profilserver nach dem ersten Aspekt, wobei der Profilserver ausschließlich über das Subnetzwerk (200) adressierbar ist.

In einer Ausführungsform ist das Subnetzwerk ausgebildet, das Verfahren nach dem zweiten Aspekt auszuführen.

Die Kommunikationsschnittstelle ist beispielsweise eine Mobilfunkschnittstelle, insbesondere eine LTE- oder eine UMTS-Schnittstelle.

Der Profilserver ist beispielsweise SMDP+-Server.

Weitere Ausführungsbeispiele der Erfindung werden Bezug nehmend auf die beiliegenden Figuren erläutert. Es zeigen:
- Fig. 1: einen Profilserver; und
- Fig. 2: ein Subnetzwerk.

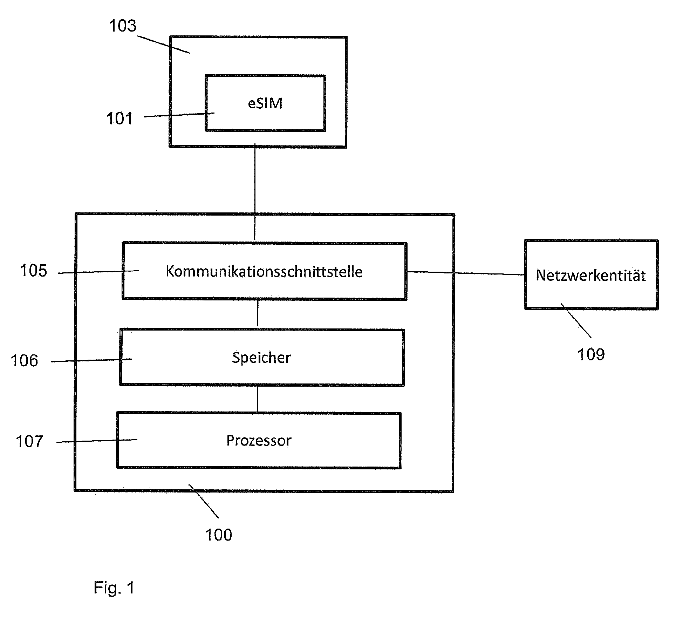

Fig. 1 zeigt einen Profilserver 100 zur Bereitstellung eines elektronischen Kommunikationsprofils für ein elektronisches Teilnehmeridentifikationsmodul 101 eines mobilen Kommunikationsgerätes 103 für die Kommunikation über ein Kommunikationsnetzwerk, mit einer Kommunikationsschnittstelle 105 zum Empfangen einer Profilanfrage nach dem Kommunikationsprofil von dem mobilen Kommunikationsgerät 103, wobei die Profilanfrage eine elektronische Identifikation des elektronischen Identifikationsmoduls 101 und eine Geräteeigenschaft des mobilen Kommunikationsgerätes 103 aufweist, einem Speicher 106, in welchem eine Mehrzahl von elektronischen Kommunikationsprofilen für unterschiedliche Geräteeigenschaften gespeichert ist, und einem Prozessor 107, welcher ausgebildet ist, zu überprüfen, ob in dem Speicher ein elektronisches Kommunikationsprofil für die Geräteeigenschaft des mobilen Kommunikationsgerätes gespeichert ist, wobei der Prozessor ausgebildet ist, falls in dem Speicher ein elektronisches Kommunikationsprofil für die Geräteeigenschaft gespeichert ist, das gespeicherte elektronische Kommunikationsprofil auszuwählen, oder, falls in dem Speicher kein elektronisches Kommunikationsprofil für die Geräteeigenschaft gespeichert ist, eine Kommunikationsadresse einer Netzwerkentität 109 bereitzustellen; wobei die Kommunikationsschnittstelle 105 ausgebildet ist, entweder das ausgewählte Kommunikationsprofil oder die Kommunikationsadresse einer Netzwerkentität 109 an das mobile Kommunikationsgerät auszusenden.

Die Netzwerkentität ist beispielsweise ein weiterer Profilserver mit den Merkmalen des Profilservers aus Fig. 1, oder ein elektronisches Verkaufsportal (elektronisches Store) in welchem ein Benutzer des Kommunikationsgerätes ein elektronisches Kommunikationsprofil für die gewünschte Geräteeigenschaft erwerben kann.

Der Profilserver 100 implementiert in einer Ausführungsform das Verfahren zum Bereitstellen eines elektronischen Kommunikationsprofils für ein elektronisches Teilnehmeridentifikationsmodul 101 eines mobilen Kommunikationsgerätes 103 für die Kommunikation über ein Kommunikationsnetzwerk, mit Empfangen einer Profilanfrage nach dem Kommunikationsprofil von dem mobilen Kommunikationsgerät 103, wobei die Profilanfrage eine elektronische Identifikation des elektronischen Identifikationsmoduls 101 und eine Geräteeigenschaft des mobilen Kommunikationsgerätes 103 aufweist;, automatischem Überprüfen durch einen Prozessor 107, ob in einem Speicher 106 ein elektronisches Kommunikationsprofil für die Geräteeigenschaft des mobilen Kommunikationsgerätes gespeichert ist, und, falls in dem Speicher 106 ein elektronisches Kommunikationsprofil für die Geräteeigenschaft gespeichert ist, Auswählen des gespeicherten elektronischen Kommunikationsprofils, oder, falls in dem Speicher 106 kein elektronisches Kommunikationsprofil für die Geräteeigenschaft gespeichert ist, Bereitstellen einer Kommunikationsadresse einer Netzwerkentität, und Aussenden des ausgewählten Kommunikationsprofils oder der Kommunikationsadresse der Netzwerkentität 109 an das mobile Kommunikationsgerät 103.

Die Netzwerkentität 109 kann ein weiterer Profilserver mit elektronischen Kommunikationsprofilen sein.

Die Netzwerkentität 109 kann jedoch ein elektronisches Verkaufsportal (eStore) sein, welches eine Mehrzahl von elektronischen Kommunikationsprofilen für unterschiedliche Geräteeigenschaften bereitstellt. Ansprechend auf die Übermittlung der Kommunikationsadresse des Verkaufsprotals 109 wird in dem Kommunikationsgerät 103 ein Webbrowser geöffnet, mit einer Auflistung von elektronischen Kommunikationsprofilen, welchen unterschiedliche Attribute zugeordnet sind, welche ein Angebot repräsentieren, wie beispielsweise Preis, Netzabdeckung oder Leistungsfähigkeit. De Benutzer kann ein Angebot elektronisch auswählen, woraufhin das Verkaufsportal das elektronische Kommunikationsprofil beispielsweise zum Abruf bereitstellt oder es an das Kommunikationsgerät übermittelt. Das Verkaufsportal 109 ist daher in einer Ausführungsform ein Profilserver mit der zusätzlichen Funktion des Erwerbs und/oder des Auswählens eines elektronischen Kommunikationsprofils.

In einer ausführungsform kann der Benutzer oder das mobile Kommunikationsgerät 103 automatisch eine Anfrage an das Verkaufsprotal 109 nach einem elektronischen Kommunikationsprofil mit der gewünschten, geräteangepassten Leistungsfähigkeit oder Dienstbandbreite übermitteln. Daraufhin kann das Verkaufsprotal 109 über den Webbrowser ein im Sinne von "Best Offer" ausgewähltes elektronisches Kommunikationsprofil anzeigen bzw. zum Abruf bereitstellen.

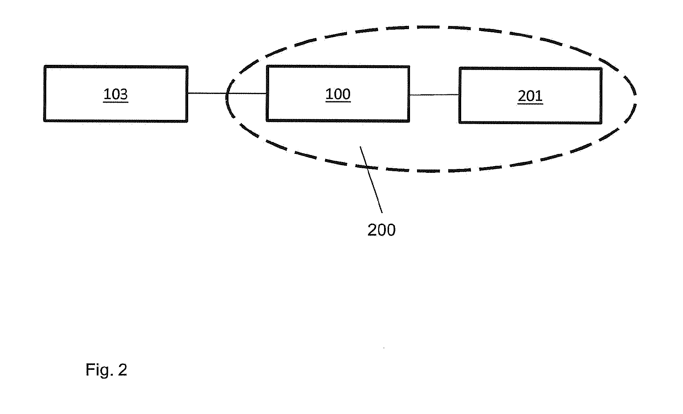

Fig. 2 zeigt ein Subnetzwerk 200 eines Kommunikationsnetzwerks mit einer Mehrzahl von Punkt-Zu-Punkt-Subnetzwerken, insbesondere ein Slice eines 5G-Kommunukationsnetzwerks, mit dem Profilserver 100, wobei der Profilserver 100 ausschließlich über das Subnetzwerk 200 adressierbar ist. Hierzu umfasst das Subnetzwerk beispielswiese eine eigene Subnetzwerk-Adresse oder Kennung.

Das Subnetzwerk 200 kann weitere Netzwerkentitäten wie einen Router oder einen Gateway aufweisen, welche in Fig. 2 nicht dargestellt sind.

Das Subnetzwerk kann ferner eine Datenbank 201 aufweisen, in welcher für unterschiedliche Kommunikationsgeräte Geräteeigenschaften oder Kommunikationscharakteristiken bzw. Leistungsfähigkeiten gespeichert sind. Der Profilserver 100 kann direkt und optional ausschließlich auf die ausgelagerte Datenbank 201 zugreifen. In der Datenbank 201 können ferner Kommunikationsprofile gespeichert sein. Dadurch wird ein effizienter Dienst zur Bereitstellung von elektronischen Kommunikationsprofilen implementiert.

## Patentansprüche

1. Profilserver (100) zur Bereitstellung eines elektronischen Kommunikationsprofils für ein elektronisches Teilnehmeridentifikationsmodul (101) eines mobilen Kommunikationsgerätes (103) für die Kommunikation über ein Kommunikationsnetzwerk, mit:
einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Identifikationsmoduls (101) und eine Geräteeigenschaft des mobilen Kommunikationsgerätes (103) aufweist;
einem Speicher (106), in welchem eine Mehrzahl von elektronischen Kommunikationsprofilen für unterschiedliche Geräteeigenschaften gespeichert ist; und
einem Prozessor (107), welcher ausgebildet ist, zu überprüfen, ob in dem Speicher ein elektronisches Kommunikationsprofil für die Geräteeigenschaft des mobilen Kommunikationsgerätes gespeichert ist, wobei der Prozessor ausgebildet ist, falls in dem Speicher ein elektronisches Kommunikationsprofil für die Geräteeigenschaft gespeichert ist, das gespeicherte elektronische Kommunikationsprofil auszuwählen, oder, falls in dem Speicher kein elektronisches Kommunikationsprofil für die Geräteeigenschaft gespeichert ist, eine Kommunikationsadresse einer Netzwerkentität (109) bereitzustellen; wobei
die Kommunikationsschnittstelle (105) ausgebildet ist, entweder das ausgewählte Kommunikationsprofil oder die Kommunikationsadresse einer Netzwerkentität (109) an das mobile Kommunikationsgerät auszusenden.

2. Profilserver (100) nach Anspruch 1, wobei in dem Speicher ferner eine Mehrzahl von Kommunikationsadressen von Profilservern mit elektronischen Kommunikationsprofilen gespeichert ist, wobei der Prozessor ausgebildet ist, eine Kommunikationsadresse eines Profilservers als Netzwerkentität aus dem Speicher (106) auszulesen.

3. Profilserver (100) nach Anspruch 2, wobei für die gespeicherten Kommunikationsadressen der Profilserver Geräteeigenschaften angegeben sind, welche durch die elektronischen Kommunikationsprofile der unter den gespeicherten Kommunikationsadressen erreichbaren Profilserver unterstützt sind, und wobei der Prozessor (107) ausgebildet ist, die Kommunikationsadresse desjenigen Profilservers aus dem Speicher (106) auszulesen, welcher ein elektronisches Kommunikationsprofil bereitstellt, das die Geräteeigenschaft unterstützt.

4. Profilserver (100) nach einem der vorstehenden Ansprüche, wobei die Geräteeigenschaft zumindest eine der folgenden Geräteeigenschaften umfasst: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

5. Profilserver (100) nach einem der vorstehenden Ansprüche, wobei der Prozessor (107) ausgebildet ist, das elektronische Kommunikationsprofil ferner in Abhängigkeit von einem Kommunikationsvertrag zwischen einem Benutzer des mobilen Kommunikationsgerätes und einem Netzwerkbetreiber auszuwählen.

6. Profilserver (100) nach einem der vorstehenden Ansprüche, wobei der Prozessor (107) ausgebildet ist, das elektronische Kommunikationsprofil ferner in Abhängigkeit von der elektronischen Identifikation auszuwählen.

7. Profilserver (100) nach einem der vorstehenden Ansprüche, wobei der Prozessor (107) ausgebildet ist, das elektronische Kommunikationsprofil an die Geräteeigenschaft anzupassen, insbesondere hinsichtlich einer Datenrate oder eines Datenvolumens, insbesondere durch eine Angabe einer höheren oder niedrigeren Datenrate oder eines niedrigeren oder höheren Datenvolumens in dem Kommunikationsprofil.

8. Profilserver (100) nach einem der vorstehenden Ansprüche, wobei das ausgewählte Kommunikationsprofil die Kommunikationseigenschaften der Kommunikation des mobilen Kommunikationsgerätes (103) über das Kommunikationsnetzwerk definiert, insbesondere eine Datenraten, eine Funkzugangstechnologie, Dienste und/oder Anwendungen für das mobile Kommunikationsgerät, insbesondere im Kommunikationsnetzwerk, eine Kommunikationsverzögerung, insbesondere eine maximale Kommunikationsverzögerung.

9. Profilserver (100) nach einem der vorstehenden Ansprüche, wobei der Prozessor (107) ausgebildet ist, die Geräteeigenschaft zu analysieren, um eine Leistungsfähigkeit des mobilen Kommunikationsgerätes zu bestimmen, und wobei der Prozessor ausgebildet ist, und dasjenige Kommunikationsprofil auszuwählen oder zu bestimmen, das die Leistungsfähigkeit, insbesondere hinsichtlich der Datenrate oder der kontaktlosen Schnittstellen wie NFC oder der Bildauflösung einer Bildkamera unterstützt.

10. Profilserver (100) nach einem der vorstehenden Ansprüche, wobei das elektronische Kommunikationsprofil ein eSIM-Profil und wobei das elektronische Teilnehmeridentifikationsmodul ein eSIM-Modul ist.

11. Profilserver (100) nach einem der vorstehenden Ansprüche, wobei die Kommunikationsschnittstelle (105) ausgebildet ist, eine Profilanfrage von einem entfernten Profilserver zu empfangen, wobei die Profilanfrage eine elektronische Identifikation des elektronischen Identifikationsmoduls (101) und eine Geräteeigenschaft des mobilen Kommunikationsgerätes (103) aufweist; wobei
der Prozessor (107) ausgebildet ist, zu überprüfen, ob in dem Speicher ein elektronisches Kommunikationsprofil für die Geräteeigenschaft des mobilen Kommunikationsgerätes (103) gespeichert ist, wobei der Prozessor ausgebildet ist, falls in dem Speicher (106) ein elektronisches Kommunikationsprofil für die Geräteeigenschaft gespeichert ist, das gespeicherte elektronische Kommunikationsprofil auszuwählen, oder, falls in dem Speicher (106) kein elektronisches Kommunikationsprofil für die Geräteeigenschaft gespeichert ist, eine Kommunikationsadresse einer Netzwerkentität (109) bereitzustellen;
wobei
die Kommunikationsschnittstelle (105) ausgebildet ist, entweder das ausgewählte Kommunikationsprofil oder die Kommunikationsadresse einer Netzwerkentität (109) an das mobile Kommunikationsgerät (103) auszusenden.

12. Verfahren zum Bereitstellen eines elektronischen Kommunikationsprofils für ein elektronisches Teilnehmeridentifikationsmodul (101) eines mobilen Kommunikationsgerätes (103) für die Kommunikation über ein Kommunikationsnetzwerk, mit:
Empfangen einer Profilanfrage nach dem Kommunikationsprofil von dem mobilen Kommunikationsgerät (103), wobei die Profilanfrage eine elektronische Identifikation des elektronischen Identifikationsmoduls (101) und eine Geräteeigenschaft des mobilen Kommunikationsgerätes (103) aufweist;
automatischem Überprüfen durch einen Prozessor (107), ob in einem Speicher (106) ein elektronisches Kommunikationsprofil für die Geräteeigenschaft des mobilen Kommunikationsgerätes gespeichert ist, und, falls in dem Speicher (106) ein elektronisches Kommunikationsprofil für die Geräteeigenschaft gespeichert ist, Auswählen des gespeicherten elektronischen Kommunikationsprofils, oder, falls in dem Speicher (106) kein elektronisches Kommunikationsprofil für die Geräteeigenschaft gespeichert ist, Bereitstellen einer Kommunikationsadresse einer Netzwerkentität; und
Aussenden des ausgewählten Kommunikationsprofils oder der Kommunikationsadresse der Netzwerkentität (109) an das mobile Kommunikationsgerät (103).

13. Verfahren nach Anspruch 12, wobei die Netzwerkentität (109) ein weiterer Profilserver mit elektronischen Kommunikationsprofilen oder ein elektronisches Verkaufsportal ist, welches eine Mehrzahl von elektronischen Kommunikationsprofilen für unterschiedliche Geräteeigenschaften bereitstellt.

14. Subnetzwerk (200) eines Kommunikationsnetzwerks mit einer Mehrzahl von Punkt-Zu-Punkt-Subnetzwerken, insbesondere ein Slice eines 5G-Kommunukationsnetzwerks, mit:
dem Profilserver (100) nach einem der Ansprüche 1 bis 3, wobei der Profilserver (100) ausschließlich über das Subnetzwerk (200) adressierbar ist.

15. Subnetzwerk (200) nach Anspruch 14, welches ausgebildet ist, das Verfahren nach Anspruch 13 auszuführen.
